# EUROPEAN PATENT SPECIFICATION

(11) **EP 1 931 213 B1**
(45) Date of publication and mention of the grant of the patent: **29.08.2012**
(21) Application number: 05789116.0
(22) Date of filing: 03.10.2005
(51) Int. Cl.: A23G 4/00

(54) **CHEWING GUM HAVING MODIFIED RELEASE**
KAUGUMMI MIT MODIFIZIERTER FREISETZUNG
CHEWING-GUM A LIBERATION MODIFIEE

(43) Date of publication of application: 18.06.2008
(73) Proprietor: Cadbury Holdings Limited, Uxbridge, Middlesex UB8 1DH (GB)
(72) Inventor: WITTORFF, Helle, 7120 Vejle Øst (DK); NEERGAARD, Jesper, 8362 Homing (DK)
(74) Representative: Olesen, Kaj
(86) International application number: PCT/DK2005/000630
(87) International publication number: WO 2007/038919

(56) References cited:
- WO-A-00/35297
- WO-A-02/076228
- WO-A-2004/028267
- US-A1- 2004 180 111

## Description

### Field of the invention

The invention relates to the field of chewing gum. In particular the invention relates to a chewing gum having modified release.

### Background of the invention

Different types of polyesters have been applied in chewing gum for different purposes in the prior art. One purpose of applying e.g. polyesters has been to obtain biodegradability. Other purposes include e.g. non-tackiness or improvement of release.

When applying polyesters within the art a tendency has typically been to compensate certain undesired properties with respect to texture by means of natural resins. A problem related to such an approach is that it has been established that both non-tack and release properties are affected negatively when adding natural resins to the chewing gum.

Another path has been followed by applying polyvinyl acetate to compensate tackiness resulting from the elastomer of the chewing gum. A problem related to such an approach is that the amounts of PVA may become significant both in relation to the applied polyester and the final chewing gum compositions. This may furthermore result in undesired texture properties and furthermore less attractive non-tack properties over time as disintegration on a long time basis of the disposed chewing gum lump may be reduced.

Another approach has been that of avoiding the use of conventional elastomer in chewing gum and base the chewing gum on both a polyester resin and a polyester elastomer. A further corresponding approach has been to omit the elastomer completely in the final chewing gum, thereby compromising the chewing gum properties, which, by nature, require use of elastomer.

WO 2004/028267 discloses a chewing um comprising at least one biodegradable polyester copolymer obtained by the polymerization of two or more cyclic esters by ring-opening, wherein the at least one biodegradable polyester copolymer has a molecular weight of less than 150000 g/mol.

WO 00/35297 discloses gum bases and chewing gum formulations, as well as methods for making the same.

It is an object of the invention to obtain an improved release in chewing gum comprising conventional elastomer.

### Summary of the invention

The invention relates to a chewing gum having modified release, said chewing gum comprising
at least one resinous polyester polymer in an amount from about 0.1% to about 70% by weight of said chewing gum,
at least one non-polyester elastomer in an amount from about ½% to about 70% by weight of said chewing gum,
polyvinyl acetate (PVA) in an amount of at least 0.5% by weight of said chewing gum,
the amount of natural resins being less than about 2% by weight of said chewing gum and the amount of polyvinyl acetate (PVA) being less than about 14% by weight of said chewing gum. and
wherein said non-polyester elastomer is selected from the group of styrene butadiene rubber (SBR), poly isobutylene (PIB), isobutylene-isoprene rubber (IIR), polyisoprene, natural rubber and any combination thereof.

According to the invention an advantageous release and texture may be obtained through the application of a resinous polyester polymer combined with a conventional non-polyester elastomer and a very low use of natural resins and a relatively low content of polyvinyl acetate (PVA).

The obtained chewing gum, thus benefits from the advantageous textural properties of e.g. non-polyester elastomer such as butyl rubber, poly isobutylene, SBR or derivatives thereof combined with the advantageous release and textural properties of the resinous polyester polymer when applied with a relatively low amount of PVA and a very low amount of a natural resin.

According to an embodiment of the invention advantageous results have also been obtained through moderate use of PVA together with the resinous polyester polymer.

According to a further embodiment of the invention it has also been established that a control of the release profile, depending on the nature of the ingredient to be released may be obtained through an adjustment of the mutual relationship between the amount of PVA and the resinous polyester polymer in particular when avoiding natural resins.

This feature has in particular been observed when the resinous polyester polymer has a glass transition temperature which is above the glass transition temperature of a typical non-polyester elastomer. In particular, it has been established that the glass transition temperature of the resinous polyester polymer may preferably be above about - 50°C.

According to the invention, the applied non-polyester elastomer is selected from styrene butadiene rubber (SBR), poly isobutylene (PIB), isobutylene-isoprene rubber (IIR), polyisoprene, natural rubber or any combination thereof well-known to have very advantageous elastomeric properties in chewing gum.

According to an embodiment of the invention PVA may be applied as a supplementary release supporter within a certain amount in the final chewing gum.

In an embodiment of the invention, the amount of resinous polyester polymer is from about 2% to about 50% by weight of said chewing gum, preferably from about 2% to about 25% by weight of said chewing gum.

In an embodiment of the invention, the resinous polyester polymer has a glass transition temperature (Tg) above - 50°C.

According to an embodiment of the invention desired resinous properties may be obtained by the application of a resinous polyester polymer having relative high glass transition temperature(s)

In an embodiment of the invention, the resinous polyester polymer has a glass transition temperature (Tg) above - 30°C,

In an embodiment of the invention, the resinous polyester polymer has a glass transition temperature (Tg) above -10°C.

In an embodiment of the invention, the resinous polyester polymer has a glass transition temperature (Tg) above 0°C.

According to a preferred embodiment of the invention, the applied resinous polyester polymer may have a Tg which is relatively high in order to obtain the desired resinous structure required to keep the applied amounts of natural resins and PVA at an acceptable level. This is especially important in order to obtain the desired texture and obtain an advantageous release. In this context it should be noted that a prerequisite for obtaining the desired texture also relies in the application of non-polyester elastomer together with the applied resinous components.

In an embodiment of the invention, the molecular weight of said at least one resinous polyester polymer is less than 400,000 g/mol Mn.

In an embodiment of the invention, the molecular weight of said at least one resinous polyester polymer is less than 150,000 g/mol Mn.

In an embodiment of the invention, the molecular weight of said at least one resinous polyester polymer is less than 80,000 g/mol Mn.

In an embodiment of the invention, the wherein the molecular weight of said at least one resinous polyester polymer is less than 20,000 g/mol Mn.

In an embodiment of the invention, the molecular weight of said at least one resinous polyester polymer is within the range of 500 g/mol Mn to 60,000 g/mol Mn.

According to an advantageous embodiment of the invention, the molecular weight of the resinous polyester polymer should be kept relatively low and correspond largely to the molecular weight of typical resins of chewing gum.

In an embodiment of the invention, the molecular weight of said at least one resinous polyester polymer is within the range of 500 g/mol Mn to 40,000 g/mol Mn.

In an embodiment of the invention, the molecular weight of said at least one resinous polyester polymer is within the range of 500 g/mol Mn to 20,000 g/mol Mn.

In an embodiment of the invention, the PVA include vinyl acetate-vinyl laurate copolymers and mixtures thereof.

In an embodiment of the invention, the molecular weight of said PVA is within the range of 1,000 g/mol Mn to 60,000 g/mol Mn.

In an embodiment of the invention, the chewing gum comprises PVA in an amount of at least 0.5% by weight of the chewing gum.

According to a further embodiment of the invention it has also been established that a control of the release profile, depending on the nature of the ingredient to be released, may be obtained through an adjustment of the mutual relationship between the amount of PVA and the resinous polyester polymer. This feature is in particular advantageous when avoiding the application of natural resins.

In an embodiment of the invention, the chewing gum comprises PVA in the amount of at least 1.0% by weight of the chewing gum.

In an embodiment of the invention, the chewing gum comprises PVA in the amount of at least 2.0% by weight of the chewing gum.

In an embodiment of the invention, the chewing gum comprises PVA in the amount of at least 5.0% by weight of the chewing gum.

An advantageous application of polyvinyl acetate is when polyvinyl acetate is applied in an amount of less than 2 to 1 of the applied resinous polyester polymer.

In an embodiment of the invention, the chewing gum comprises at least one synthetic resin in the amount of less than 3:2 when compared to the amount of said resinous polyester polymer.

According to further advantageous embodiments, the ratio should be kept lower than about 3 to 2 in order to obtain the desired texture and release profile in the chewing gum.

In an embodiment of the invention, the chewing gum is substantially free of natural resin(s).

According to a preferred embodiment of the invention, natural resins may be avoided in the chewing gum formulation with the intention to obtain a satisfactory texture and release.

According to an embodiment of the invention, the amount of non-polyester elastomer is kept relatively low in order to establish the desired softness of the chewing gum. It may however be noted that some control of the softness may be obtained or compensated by a reduction of the molecular weight of the applied non-polyester elastomer. On the other hand the amount of non-polyester elastomer may be sufficient to obtain the desired gum texture.

In an embodiment of the invention, the chewing gum further comprises an elastomeric polyester polymer.

In an embodiment of the invention, the ratio between the non-polyester elastomer and the resinous polyester is within the range of about 5:1 to 1:30.

According to a preferred embodiment of the invention, the ratio between the resinous polyester polymer and the non-polyester elastomer may be kept within a certain range in order to obtain the desired texture. The average molecular weight of the resinous polyester polymer and the non-polyester elastomer, respectively, may also e.g, be obtained through a mixture of two or further resinous polyester polymers and a mixture of two or further non-polyester elastomers. Thus, an average molecular weight of a certain value of e.g. the non-polyester elastomer may be obtained by mixing high and low molecular weight non-polyester elastomers in an appropriate ratio. Specifically, a mixture of about 2/3 low molecular non-polyester elastomer (30000 g/mol) and 1/3 high molecular weight non-polyester elastomer (400000) would result in an average molecular weight of about 153000.

In an embodiment of the invention, the ratio between the non-polyester elastomer and the resinous polyester polymer is within the range of about 2:1 and 1:10.

In an embodiment of the invention, the ratio between the non-polyester elastomer and the resinous polyester polymer is within the range of about 1:1 and 1:10.

In an embodiment of the invention, the chewing gum is coated with an outer coating selected from the group consisting of hard coating, soft coating and edible film-coating.

In an embodiment of the invention, the outer coating comprises at least one additive component selected from the group consisting of a binding agent, a moisture-absorbing component, a film-forming agent, a dispersing agent, an antisticking component, a bulking agent, a flavoring agent, a coloring agent, a pharmaceutically or cosmetically active component, a lipid component, a wax component, a sugar and an acid.

In an embodiment of the invention, the chewing gum is tableted.

According to an advantageous embodiment of the invention, chewing gum may advantageously be processed and formed as a compressed chewing gum due to the fact that the resinous polyester polymer has advantageous properties comparable to other synthetic resinous polymers such as PVA, which may ease the granulation of the gum or gum base prior to the final compression.

In an embodiment of the invention said polyester polymer is obtainable by ring-opening polymerization of cyclic monomers.

In an embodiment of the invention said polyester polymer is obtainable by ring-opening polymerization of cyclic monomers selected from the group of cyclic esters and cyclic carbonates.

In an embodiment of the invention said polyester polymer is obtainable by ring-opening polymerization of cyclic monomers selected from the group of D,L-lactide, L-lactide, glycolide, ε-caprolactone, δ-valerolactone, trimethylene carbonate (TMC) and dioxanone.

In an embodiment of the invention said polyester polymer is a copolymer obtainable by ring-opening polymerization of cyclic monomers selected from the group of D,L-lactide, L-lactide, glycolide, ε-caprolactone, δ-valerolactone, trimethylene carbonate (TMC) and dioxanone.

In an embodiment of the invention said polyester polymer is produced through reaction of at least one di- or polyfunctional alcohol or derivative thereof and at least one di- or polyfunctional acid or derivative thereof.

In an embodiment of the invention said acid derivative comprises esters, anhydrides or halides of carboxylic acids.

In an embodiment of the invention said acid derivative comprises methyl or ethyl esters of acids.

In an embodiment of the invention said alcohols or derivatives thereof comprises polyols.

In an embodiment of the invention said polyester polymer is produced through polymerization of hydroxy-carboxylic acids such as lactic acid, glycolic acid or combinations thereof.

In an embodiment of the invention said polyester has a PD of 1.1 to 20, preferably 1.3 to 12.

### Figures

The invention will now be described in detail with reference to the description and the drawings of which
fig.1 and 2 illustrate a time intensity evaluation of different chewing gums of example 5 and where
fig. 3 illustrates a time intensity evaluation of different chewing gums of example 6.

### Detailed description

As referred to herein, the glass transition temperature (Tg) may be determined by for example DSC (DSC: differential scanning calorimetry). The DSC may generally be applied for determining and studying of the thermal transitions of a polymer and specifically, the technique may be applied for the determination of a second order transition of a material. The transition at Tg is regarded as such a second order transition, i.e. a thermal transition that involves a change in heat capacity, but does not have a latent heat. Hence, DSC may be applied for studying Tg. Unless otherwise indicated, a heating rate of 10°C/min will be applied.

Unless otherwise indicated, as used herein with regard to polymers, the term "molecular weight" means number average molecular weight (Mn) in g/mol. Furthermore, as used herein the short form PD designates the polydispersity of polymers, polydispersity being defined as Mw /Mn, where Mw is the weight average molecular weight of a polymer. A well-established technique for characterization of polymers is gel permeation chromatography (GPC).

In the present text, it is assumed that the temperature in the mouth of the chewing gum consumer is about human body temperature, although it may in praxis during chewing be a few degrees below body temperature. A glass transition temperature above mouth temperature is herein referred to as a high Tg, whereas a Tg below mouth temperature is herein referred to as a low Tg.

In the present context a modified release refers to the release obtained through the provisions of the invention.

Chewing gum of the present invention typically comprises a water-soluble bulk portion, a water-insoluble chewable gum base portion and flavoring agents. The water-soluble portion dissipates with a portion of the flavoring agent over a period of time during chewing. The gum base portion is retained in the mouth throughout the chew. The term chewing gum refers to both a chewing and bubble type gum in its general sense.

The gum base is the masticatory substance of the chewing gum, which imparts the chew characteristics to the final product. The gum base typically defines the release profile of flavors and sweeteners and plays a significant role in the gum product.

The insoluble portion of the gum typically may contain any combination of elastomers, vinyl polymers, elastomer plasticizers, waxes, softeners, fillers and other optional ingredients such as colorants and antioxidants. Polymeric elastomer plasticizers may also according to the invention generally be referred to as a resin or as a resinous compound.

The composition of gum base formulations can vary substantially depending on the particular product to be prepared and on the desired masticatory and other sensory characteristics of the final product. However, typical ranges (% by weight) of the above gum base components are: 5 to 80% by weight elastomeric compounds, 5 to 80% by weight elastomer plasticizers, 0 to 40% by weight of waxes, 5 to 35% by weight softener, 0 to 50% by weight filler, and 0 to 5% by weight of miscellaneous ingredients such as antioxidants, colorants, etc. The gum base may comprise about 5 to about 95 percent, by weight, of the chewing gum, more commonly; the gum base comprises 10 to about 60 percent of the gum.

Elastomers provide the rubbery, cohesive nature to the gum, which varies depending on this ingredient's chemical structure and how it may be compounded with other ingredients. Elastomers suitable for use in the gum base and gum of the present invention may include natural or synthetic types.

The elastomer may be any water-insoluble polymer known in the art, and includes those polymers utilized for chewing gum and bubble gum listed in Food and Drug Administration, CFR, Title 21, Section 172,615, as "Masticatory Substances of Natural Vegetable Origin" and "Masticatory Substances, Synthetic"

The elastomers listed below are referred to in this description as conventional or non-polyester elastomers.

Useful natural elastomers include natural rubber such as smoked or liquid latex and guayule, natural gums such as jelutong, lechi caspi, perillo, sorva, massaranduba balata, massaranduba chocolate, nispero, rosidinha, chicle, gutta percha, gutta kataiu, niger gutta, tunu, chilte, chiquibul, gutta hang kang.

Useful synthetic elastomers include high molecular weight elastomers such as butadiene-styrene copolymers and isobutylene-isoprene copolymers, low molecular weight elastomers such as polybutene, polybutadiene and polyisobutylene, polyethylene, or mixtures thereof.

Butadiene-styrene type elastomers (SBR) typically are copolymers of from about 20:80 to 60:40 styrene:butadiene monomers. The ratio of these monomers affects the elasticity of the SBR as evaluated by mooney viscosity. As the styrene:butadiene ratio decreases, the mooney viscosity decreases.
The structure of SBR typically consists of straight chain 1,3-butadiene copolymerized with phenylethylene (styrene) and provides the non-linear molecular nature of these elastomers. The average molecular weight of SBR is <600,000 g/mole.

Isobutylene-isoprene type elastomers (butyl rubber) have molar percent levels of isoprene ranging from 0,2 to 4,0. Similar to SBR, as the isoprene:isobutylene ratio decreases, so does the elasticity, measured by mooney viscosity.
The structure of butyl rubber typically consists of branched 2-methyl-1,3-butadiene (isoprene) copolymerized with branched 2-methylpropene (isobutylene), and, as with SBR, this type of structure is non-linear in nature. The average molecular weight of butyl rubber is in the range from 150,000 g/mole to 1,000,000 g/mole.

Polyisobutylene (PIB) as with SBR and butyl, is also non-linear in nature. The low molecular weight elastomers provide soft chew characteristics to the polymer system and still provide the elastic qualities as do the other elastomers. Average molecular weights may range from about 30,000 to 120,000 g/mole and the penetration may range from about 4 millimeters to 20 millimeters. The higher the penetration, the softer the PIB. Similar to the SBR and butyl, the high molecular weight elastomers provide elasticity of the gum. Average molecular weight may range from 120,000 to 1,000,000 g/mole. Again, if used at all, the molecular weight should be relatively low.

Vinyl copolymeric types of polymers may also be applied as a supplementary polymer of the gum base. For vinyl copolymeric types, the amount of vinyl laurate, vinyl stearate, or ethylene present in the vinyl laurate/vinyl acetate (VL/VA), vinyl stearate/vinyl acetate (VS/VA), or ethylene/vinyl acetate (EVA) copolymers respectively typically ranges from about 10 to about 60 percent by weight of the copolymer. Average molecular weights of these polymers may range from about 2,000 g/mole to about 100,000 g/mole.

The vinyl polymers as polyvinyl alcohol and polyvinyl acetate having an average molecular weight from about 8,000 g/mole to about 65,000 g/mole.

The elastomer compounds may be of natural origin but are preferably of synthetic origin.

Elastomer plasticizers vary the firmness of the gum base. Their specificity on elastomer inter-molecular chain breaking (plasticizing) along with their varying softening points cause varying degrees of finished gum firmness and compatibility when used in base. This may be important when one wants to provide more elastomeric chain exposure to the alkanic chains of the waxes.

According to the present invention, the chewing gum comprises one plasticizer, also referred to as a resin, comprising one or several resinous synthetic polyester polymers.

Furthermore, according to the present invention, these polyesters are very suitable as resinous compounds in combination with one or further conventional elastomers in the chewing gum.

Further polymeric or non-polymeric plasticizers may be applied according to the present invention are triacetin, acetylated mono-and di-and triglycerides of short chain fatty acids, acetylated mono-and di-and triglycerides of medium chain fatty acids, acetylated monoglycerides of long chain fatty acids, glycerol ester of rosin and low molecular weight PVAc. The two latter may also be referred to as a natural and synthetic resin, respectively, within the art. The above mentioned plasticizers may also be referred to as conventional resins in the following description.

The plasticizers used may be of one type or of combinations of more than one type. Typically, the ratios of one to the other are dependent on each respective softening point, the effect on flavor release, and the respective degree of tack they cause to the gum.

Examples of such synthetic resins include polyvinyl acetate, vinyl acetate-vinyl laurate copolymers and mixtures thereof. Examples of synthetic elastomers include, but are not limited to, synthetic elastomers listed in Food and Drug Administration, CFR, Title 21, Section 172,615 (the Masticatory Substances, Synthetic) such as polyisobutylene. e.g. having a gel permeation chromatography (GPC) average molecular weight in the range of about 10,000 to 1,000,000 including the range of 50,000 to 80,000, isobutylene-isoprene copolymer (butyl elastomer), styrene-butadiene copolymers e.g. having styrene-butadiene ratios of about 1:3 to 3:1, polyisoprene, polyethylene, and combinations hereof.

Examples of natural resins are: Natural rosin esters, often referred to as ester gums including as examples glycerol esters of partially hydrogenated rosins, glycerol esters of polymerized rosins, glycerol esters of partially dimerised rosins, glycerol esters of tally oil rosins, pentaerythritol esters of partially hydrogenated rosins, methyl esters of rosins, partially hydrogenated methyl esters of rosins, pentaerythritol esters of rosins, synthetic resins such as terpene resins derived from alpha-pinene, beta-pinene, and/or d-limonene, and natural terpene resins.

It is common in the industry to combine in a gum base a synthetic elastomer having a high molecular weight and a synthetic elastomer having a low molecular weight. Examples of such combinations of are polyisobutylene and styrene-butadiene, polyisobutylene and polyisoprene, polyisobutylene and isobutylene-isoprene copolymer (butyl rubber) and a combination of polyisobutylene, styrene-butadiene copolymer and isobutylene isoprene copolymer and mixtures thereof.

Resinous polyesters may generally be produced though different types of reactions and on the basis of different monomers.

One resinous polymer may e.g. be prepared by step-growth polymerization of di-, tri- or higher-functional alcohols with di-, tri- or higher-functional aliphatic or aromatic carboxylic acids or esters thereof. Likewise, also hydroxy acids or anhydrides and halides of di- or polyfunctional carboxylic acids may be used as monomers. The polymerization may involve direct polyesterification or transesterification and may be catalyzed. Use of branched monomers suppresses the crystallinity of the polyester polymers. Mixing of dissimilar monomer units along the chain also suppresses crystallinity. To control the reaction and the molecular weight of the resulting polymer it is possible to stop the polymer chains by addition of monofunctional alcohols or acids and/or to utilize a stoichiometric imbalance between acid groups and alcohol groups or derivatives of either. Also the adding of long chain aliphatic carboxylic acids or aromatic monocarboxylic acids may be used to control the degree of branching in the polymer and conversely multifunctional monomers are sometimes used to create branching. Moreover, following the polymerization monofunctional compounds may be used to end cap the free hydroxyl and carboxyl end groups.

In general, polyfunctional carboxylic acids are high-melting solids that have very limited solubility in the polycondensation reaction medium. Often esters or anhydrides of the polyfunctional carboxylic acids are used to overcome this limitation. Polycondensations involving carboxylic acids or anhydrides produce water as the condensate, which requires high temperatures to be driven off. Thus, polycondensations involving transesterification of the ester of a polyfunctional acid are often the preferred process. For example, the dimethyl ester of terephthalic acid may be used instead of terephthalic acid itself. In this case, methanol rather than water is condensed, and the former can be driven off more easily than water. Usually, the reaction is carried out in the bulk (no solvent) and high temperatures and vacuum are used to remove the by-product and drive the reaction to completion. In addition to an ester or anhydride, a halide of the carboxylic acid may also be used under certain circumstances.

Usually, for this type of polyester, the preferred polyfunctional carboxylic acids or derivatives thereof are either saturated or unsaturated aliphatic or aromatic and contain 2 to 100 carbon atoms and more preferably 4 to 18 carbon atoms. In the polymerization of this type of polyester some applicable examples of carboxylic acids, which may be employed as such or as derivatives thereof, include aliphatic polyfunctional carboxylic acids such as oxalic, malonic, citric, succinic, malic, tartaric, fumaric, maleic, glutaric, glutamic, adipic, glucaric, pimelic, suberic, azelaic, sebacic, dodecanedioic acid, etc. and cyclic aliphatic polyfunctional carboxylic acids such as cyclopropane dicarboxylic acid, cyclobutane dicarboxylic acid, cyclohexane dicarboxylic acid, etc. and aromatic polyfunctional carboxylic acids such as terephthalic, isophthalic, phthalic, trimellitic, pyromellitic and naphthalene 1,4-, 2,3-, 2,6-dicarboxylic acids and the like. For the purpose of illustration and not limitation, some examples of carboxylic acid derivatives include hydroxy acids such as 3-hydroxy propionic acid, lactic acid, glycolic acid and 6-hydroxycaproic acid and anhydrides, halides or esters of acids, for example dimethyl or diethyl esters, corresponding to the already mentioned acids, which means esters such as dimethyl or diethyl oxalate, malonate; succinate, fumarate, maleate, glutarate, adipate, pimelate, suberate, azelate, sebacate, dodecanedioate, terephthalate, isophthalate, phthalate, etc. Generally speaking, methyl esters are sometimes more preferred than ethyl esters due to the fact that higher boiling alcohols are more difficult to remove than lower boiling alcohols.

Furthermore, the usually preferred polyfunctional alcohols contain 2 to 100 carbon atoms as for instance polyglycols and polyglycerols. In the polymerization process of condensation type polyesters some applicable examples of alcohols, which may be employed as such or as derivatives thereof, includes polyols such as ethylene glycol, 1,2-propanediol, 1,3-propanediol, 1,3-butanediol, 1,4-butanediol, 1,6-hexanediol, diethylene glycol, 1,4-cyclohexanediol, 1,4-cyclohexanedimethanol, neopentyl glycol, glycerol, trimethylolpropane, pentaerythritol, sorbitol, mannitol, etc. For the purpose of illustration and not limitation, some examples of alcohol derivatives include triacetin, glycerol palmitate, glycerol sebacate, glycerol adipate, tripropionin, etc.

Additionally, monofunctional compounds may be applied as chain-stoppers. They are preferably either monohydroxy alcohols containing 1-20 carbon atoms or monocarboxylic acids containing 2-26 carbon atoms. General examples are medium or long-chain fatty alcohols or acids, and specific examples include monohydroxy alcohols such as methanol, ethanol, butanol, hexanol, octanol, etc. and lauryl alcohol, myristyl alcohol, cetyl alcohol, stearyl alcohol, stearic alcohol, etc. and monocarboxylic acids such as acetic, lauric, myristic, palmitic, stearic, arachidic, cerotic, dodecylenic, palmitoleic, oleic, linoleic, linolenic, erucic, benzoic, naphthoic acids and substituted napthoic acids, 1-methyl-2 naphthoic acid and 2-isopropyl-1-naphthoic acid, etc.

Typically, an acid catalyst or a transesterification catalyst is used in the polyester condensation polymerization and non-limiting examples of those are the metal catalysts such as acetates of manganese, zinc, calcium, cobalt or magnesium, and antimony(III)oxide, germanium oxide or halide and tetraalkoxygermanium, titanium alkoxide, zinc or aluminum salts.

Another type of polyester polymers may e.g. be obtained by ring-opening polymerization of one or more cyclic esters, which include but are not limited to glycolides, lactides, lactones such as ε-caprolactone, δ-valerolactone or β-propiolactone and carbonates. The polymerization process may take place in the presence of at least one appropriate catalyst such as metal catalysts, of which stannous octoate is a non-limiting example and the polymerization process may be initiated by initiators such as polyols, polyamines or other molecules with multiple hydroxyl or other reactive groups and mixtures thereof.

Generally, the polyesters used in the chewing gum of the present invention may be homopolymers, copolymers or terpolymers, including graft- and block-polymers.

In accordance with the general principles in manufacturing a chewing gum within the scope of the invention, variations of different suitable ingredients are listed and explained below.

The chewing gum according to the invention may comprise coloring agents. According to an embodiment of the invention, the chewing gum may comprise color agents and whiteners such as FD&C-type dyes and lakes, fruit and vegetable extracts, titanium dioxide and combinations thereof.

Further useful chewing gum base components include antioxidants, e.g. butylated hydroxytoluene (BHT), butyl hydroxyanisol (BHA), propylgallate and tocopherols, and preservatives.

In an embodiment of the invention, the chewing gum comprises softeners in an amount of about 0 to about 18% by weight of the chewing gum, more typically about 0 to about 12% by weight of the chewing gum.

Waxes may be optional depending on the properties of the individual formulations. Petroleum waxes aid in the curing of the finished confectionery product made from the polymer system as well as improve shelf-life and texture. Wax crystal size influences the release of flavor. Those waxes high in iso-alkanes have a smaller crystal size than those waxes high in normal-alkanes, especially those with normal-alkanes of carbon numbers less than 30. The smaller crystal size allows slower release of flavor since there is more hindrance of the flavor's escape from this wax versus a wax having larger crystal sizes. The compatibility of polymer systems made using normal-alkanic waxes is less when compared to polymer systems made with iso-alkanic waxes.

Waxes and fats may moreover be used for the adjustment of the consistency and for softening of the chewing gum base when preparing chewing gum bases.

Petroleum wax (refined paraffin and microcrystalline wax) and paraffin wax is composed of mainly straight-chained normal-alkanes and branched iso-alkanes. The ratio of normal-alkanes to iso-alkanes varies.

The normal-alkanic waxes typically have carbon chain lengths >C-18 but the lengths are not predominantly longer than C-30. The branched and ring structures are located near the end of the chain for those waxes that are predominantly normal-alkanic. The viscosity of normal-alkanic waxes is <10 mm2/s (at 100 °C) and the combined number average molecular weight is <600 g/mole.

The iso-alkanic waxes typically have carbon lengths that are predominantly greater than C-30. The branched chains and ring structures are located randomly along the carbon chain in those waxes that are predominantly iso-alkanic. The viscosity of iso-alkanic waxes is greater than 10 mm2/s (at 100 °C) and the combined number average molecular weight is >600 g/mole.

Synthetic waxes are produced by means atypical of petroleum wax production and thus are not considered petroleum wax. The synthetic waxes may include waxes containing branched alkanes and copolymerized with monomers such as but not limited to propylene and polyethylene and Fischer Tropsch type waxes. Polyethylene wax is a synthetic wax containing alkane units of varying lengths having attached thereto ethylene monomers.

The natural waxes may include rice bran wax, bees' wax, carnauba wax or candelilla wax.

In connection with the present invention, any conventionally used and suitable type of wax and fat may be used, such as for instance rice bran wax, polyethylene wax, petroleum wax (refined paraffin and microcrystalline wax), paraffin, beeswax, carnauba wax, candelilla wax, cocoa butter, degreased cocoa powder and any suitable oil or fat, as e.g. completely or partially hydrogenated vegetable oils or completely or partially hydrogenated animal fats.

Softeners/emulsifiers may according to the invention be added both in the chewing gum and the gum base.

The selection of softeners has an influence on the softness of the base. Softeners modify the texture, cause the hydrophobic and hydrophilic components of the base to be miscible, and may further plasticize the synthetic polymers of the polymer system. The emulsifiers, which belong to the group of softeners, provide the polymer system with water-binding properties, which confer to the polymer system a pleasant smooth surface and reduce its adhesive properties.

Softeners suitable for use in the polymer system include triglycerides of non-hydrogenated, partially hydrogenated and fully hydrogenated vegetable oils and tallow, cocoa butter and degreased cocoa powder and in addition to these the emulsifiers.

The group of triglycerides includes cottonseed, palm, palm kernel, coconut, safflower, rapeseed, sunflower, tallow, soybean, cocoa butter, medium chained triglycerides and the like.

The caproic, caprylic, capric, myristic; lauric and palmitic fatty acids of the triglycerides tend to plasticize the synthetic elastomers more than triglycerides containing predominantly stearic fatty acid.

To the group of emulsifiers belong the monoglycerides, diglycerides, acetylated mono and diglycerides, distilled mono- and diglycerides, glycerol monostearate, propylene glycol monostearate, Na-, K-, Mg- and Ca-stearates, glycerol triacetate, fatty acid monoglycerides (e.g. stearic, palmitic, oleic and linoleic acids), lactic acid esters and acetic acid esters of mono- and diglycerides, sugar esters of edible fatty acids also referred to as sucrose polyesters including those disclosed in WO 00/25598 hereby included by reference, lecithin and hydroxylated lecithin, most of these may contain triglyceride levels less than 2 percent by weight from their manufacturing processing,

The softeners including the emulsifiers may be used alone or at least two or more in combination.

Fillers used in polymer system modify the texture of the polymer system and aid in processing. Particle size has an effect on cohesiveness, density and processing characteristics of the polymer system and its compounding: The smaller the particle size, the more dense and cohesive the final polymer system. Also, by selecting fillers based on their particle size distribution, initial mass compounding may be varied, thus allowing alteration of the compounding characteristics of the initial mass during polymer system processing and ultimately the final chew characteristics of gums made from these polymer systems.

Fillers suitable for use in the polymer system include magnesium and calcium carbonate, ground limestone and silicate types such as magnesium and aluminum silicate, kaolin and clay, aluminum oxide, silicon oxide, talc, as well as titanium oxide, mono-, di- and tricalcium phosphate, sodium sulphate, cellulose polymers such as ethyl, methyl and wood or mixtures thereof.

Talc filler may be used in the polymer system and confectionery product of the present invention that may come in contact with or employ acid flavors or provide an acidic environment needed to prevent degradation of an artificial sweetener by reacting with calcium carbonate type fillers. Mean particle size for calcium carbonate and talc fillers typically range from about 0.1 micron to about 15 microns.

The fillers may also include natural organic fibers such as fruit vegetable fibers, grain, rice, cellulose and combinations thereof.

In an embodiment of the invention, the chewing gum comprises filler in an amount of about 0 to about 50% by weight of the chewing gum, more typically about 5 to about 20% by weight of the chewing gum.

In addition to a, typically, water insoluble gum base portion, a typical chewing gum includes a water soluble bulk portion and one or more flavoring agents. The water-soluble portion may include bulk sweeteners, high intensity sweeteners, flavoring agents, softeners, emulsifiers, colors, acidulants, fillers, antioxidants, and other components that provide desired attributes.

Suitable bulk sweeteners include both sugar and non-sugar sweetening components. Bulk sweeteners typically constitute from about 5 to about 95% by weight of the chewing gum, more typically about 20 to about 80% by weight such as 30 to 60% by weight of the gum.

Useful sugar sweeteners are saccharide-containing components commonly known in the chewing gum art including, but not limited to, sucrose, dextrose, maltose, dextrins, trehalose, D-tagatose, dried invert sugar; fructose, levulose, galactose, corn syrup solids, and the like, alone or in combination.

Sorbitol can be used as a non-sugar sweetener. Other useful non-sugar sweeteners include, but are not limited to, other sugar alcohols such as mannitol, xylitol, hydrogenated starch hydrolysates, maltitol, isomalt, erythritol, lactitol and the like, alone or in combination.

High-intensity artificial sweetening agents can also be used alone or in combination with the above sweeteners. Preferred high-intensity sweeteners include, but are not limited to sucralose, aspartame, salts of acesulfame, alitame, neotame, twinsweet, saccharin and its salts, cyclamic acid and its salts, glycyrrhizin, dihydrochalcones, thaumatin, monellin, stevioside and the like, alone or in combination. In order to provide longer lasting sweetness and flavor perception, it may be desirable to encapsulate or otherwise control the release of at least a portion of the artificial sweetener. Techniques such as wet granulation, wax granulation, spray drying, spray chilling, fluid bed coating, coascervation, encapsulation in yeast cells and fiber extrusion may be used to achieve the desired release characteristics. Encapsulation of sweetening agents can also be provided using another chewing gum component such as a resinous compound.

Usage level of the high intensity artificial sweetener will vary considerably and will depend on factors such as potency of the sweetener, rate of release, desired sweetness of the product, level and type of flavor used and cost considerations. Thus, the active level of high potency artificial sweetener may vary from about 0 to about 8% by weight, preferably 0.001 to about 5% by weight. When carriers used for encapsulation are included, the usage level of the encapsulated sweetener will be proportionately higher.

Combinations of sugar and/or non-sugar sweeteners can be used in the chewing gum formulation processed in accordance with the invention. Additionally, the softener may also provide additional sweetness such as aqueous sugar or alditol solutions.

If a low-calorie gum is desired, a low-caloric bulking agent can be used. Examples of low caloric bulking agents include polydextrose, Raftilose, Raftilin, fructooligosaccharides (NutraFlora^{®}), palatinose oligosaccharides; guar gum hydrolysates (e.g. Sun Fiber^{®}) or indigestible dextrins (e.g. Fibersol^{®}). However, other low-calorie bulking agents can be used.

The chewing gum according to the present invention may contain aroma agents and flavoring agents including natural and synthetic flavorings e.g. in the form of natural vegetable components, essential oils, essences, extracts, powders, including acids and other substances capable of affecting the taste profile. Examples of liquid and powdered flavorings include coconut, coffee, chocolate, vanilla, grape fruit, orange, lime, menthol, liquorice, caramel aroma, honey aroma, peanut, walnut, cashew, hazelnut, almonds, pineapple, strawberry, raspberry, tropical fruits, cherries, cinnamon, peppermint, wintergreen, spearmint, eucalyptus, and mint, fruit essence such as from apple, pear, peach, strawberry, apricot, raspberry, cherry, pineapple, and plum essence. The essential oils include peppermint, spearmint, menthol, eucalyptus, clove oil, bay oil, anise; thyme, cedar leaf oil, nutmeg, and oils of the fruits mentioned above.

The chewing gum flavor may be a natural flavoring agent, which is freeze-dried, preferably in the form of a powder, slices or pieces or combinations thereof. The particle size may be less than 3 mm, less than 2 mm or more preferred less than 1 mm, calculated as the longest dimension of the particle. The natural flavoring agent may in a form where the particle size is from about 3 µm to 2 mm, such as from 4 µm to 1 mm. Preferred natural flavoring agents include seeds from fruit e.g. from strawberry, blackberry and raspberry.

Various synthetic flavors, such as mixed fruit flavors may also be used in the present chewing gum centers. As indicated above; the aroma agent may be used in quantities smaller than those conventionally used. The aroma agents and/or flavors may be used in the amount from 0.01 to about 30% by weight of the final product depending on the desired intensity of the aroma and/or flavor used. Preferably, the content of aroma/flavor is in the range oaf 0.2 to 3% by weight of the total composition.

In an embodiment of the invention, the flavoring agents comprise natural and synthetic flavorings in the form of natural vegetable components, essential oils, essences, extracts, powders, including acids and other substances capable of affecting the taste profile..

Further chewing gum ingredients, which may be included in the chewing gum according to the present invention, include surfactants and/or solubilizers, especially when pharmaceutically or biologically active ingredients are present. As examples of types of surfactants to be used as solubilizers in a chewing gum composition according to the invention, reference is made to H.P. Fiedler, Lexikon der Hilfstoffe für Pharmacie, Kosmetik und Angrenzende Gebiete, pages 63-64 (1981) and the lists of approved food emulsifiers of the individual countries. Anionic, cationic, amphoteric or non-ionic solubilizers can be used. Suitable solubilizers include lecithin, polyoxyethylene stearate; polyoxyethylene sorbitan fatty acid esters, fatty acid salts, mono and diacetyl tartaric acid esters of mono and diglycerides of edible fatty acids, citric acid esters of mono and diglycerides of edible fatty acids, saccharose esters of fatty acids, polyglycerol esters of fatty acids, polyglycerol esters of interesterified castor oil acid (E476), sodium stearoyllatylate, sodium lauryl sulfate and sorbitan esters of fatty acids and polyoxyethylated hydrogenated castor oil (e.g. the product sold under the trade name CREMOPHOR), block copolymers of ethylene oxide and propylene oxide (e.g. products sold under trade names PLURONIC and POLOXAMER), polyoxyethylene fatty alcohol ethers, polyoxyethylene sorbitan fatty acid esters, sorbitan esters of fatty acids and polyoxyethylene steraric acid esters.

Particularly suitable solubilizers are polyoxyethylene stearates, such as for instance polyoxyethylene(8)stearate and polyoxyethylene(40)stearate, the polyoxyethylene sorbitan fatty acid esters sold under the trade name TWEEN, for instance TWEEN 20 (monolaurate), TWEEN 80 (monooleate), TWEEN 40 (monopalmitate), TWEEN 60 (monostearate) or TWEEN 65 (tristearate), mono and diacetyl tartaric acid esters of mono and diglycerides of edible fatty acids, citric acid esters of mono and diglycerides of edible fatty acids, sodium stearoyllatylate, sodium laurylsulfate, polyoxyethylated hydrogenated castor oil, blockcopolymers of ethylene oxide and propyleneoxide and polyoxyethylene fatty alcohol ether. The solubilizer may either be a single compound or a combination of several compounds. In the presence of an active ingredient, the chewing gum may preferably also comprise a carrier known in the art.

Emulsifiers, which are used as softeners may include tallow, hydrogenated tallow, hydrogenated and partially hydrogenated vegetable oils, cocoa butter, glycerol monostearate, glycerol triacetate, lecithin, mono-, di-and triglycerides, acetylated monoglycerides, fatty acids (e.g. stearic, palmitic, oleic and linoleic acids), and combinations thereof.

According to an embodiment of the invention, the chewing gum may comprise a pharmaceutically, cosmetically or biologically active substance. Examples of such active substances, a comprehensive list of which is found e.g. in WO 00/25598, which is incorporated herein by reference,

The active agents to be used in connection with the present invention may be any substance desired to be released from the chewing gum. If an accelerated rate of release is desired, corresponding to the effect obtained for the flavor, the primary substances are those with limited water solubility, typically below 10g /100 ml including substances which are entirely water insoluble. Examples are medicines, dietary supplements, oral compositions, anti-smoking agents, highly potent sweeteners, pH adjusting agents, etc.

Further examples of active ingredients include paracetamol, benzocaine, cinnarizine, menthol, carvone, caffeine, chlorhexidine-di-acetate, cyclizine hydrochloride, 1,8-cineol, nandrolone, miconazole, mystatine, aspartame, sodium fluoride, nicotine, saccharin, cetylpyridinium chloride, other quaternary ammoniumcompounds, vitamin E, vitamin A, vitamin D, glibenclamide or derivatives thereof, progesterone, acetylsalicylic acid, dimenhydrinate, cyclizine, metronidazole, sodium hydrogencarbonate, the active components from ginkgo, the active components from propolis, the active components from ginseng, methadone, oil of peppermint, salicylamide, hydrocortisone or astemizole.

Examples of active agents in the form of dietary supplements are for instance salts and compounds having the nutritive effect of vitamin B2 (riboflavin), B12, folic acid, niacine, biotine, poorly soluble glycerophosphates, amino acids, the vitamins A, D, E and K, minerals in the form of salts, complexes and compounds containing calcium, phosphorus, magnesium, iron, zinc, copper, iodine, manganese, chromium, selenium, molybdenum, potassium, sodium or cobalt.

Furthermore, reference is made to lists of nutritients accepted by the authorities in different countries such as for instance US code of Federal Regulations, Title 21, Section 182.5013.182 5997 and 182.8013-182.8997.

Examples of active agents in the form of compounds for the care or treatment of the oral cavity and the teeth, are for instance bound hydrogen peroxide and compounds capable of releasing urea during chewing.

Examples of active agents in the form of antiseptics are for instance salts and compounds of guanidine and biguanidine (for instance chlorhexidine diacetate) and the following types of substances with limited water-solubility: quaternary ammonium compounds (for instance ceramine, chloroxylenol, crystal violet, chloramine), aldehydes (for instance paraformaldehyde), compounds of dequaline, polynoxyline, phenols (for instance thymol, para chlorophenol, cresol) hexachlorophene, salicylic anilide compounds, triclosan, halogenes (iodine, iodophores, chloroamine, dichlorocyanuric acid salts), alcools (3,4 dichlorobenzyl alcohol, benzyl alcohol, phenoxyethanol, phenylethanol), cf. furthermore Martindale, The Extra Pharmacopoeia, 28th edition, page 547-578; metal salts, complexes and compounds with limited water-solubility, such as aluminum salts, (for instance aluminum potassium sulfate AlK (S0₄) 2, 12H₂0) and furthermore salts, complexes and compounds of boron, barium, strontium, iron, calcium, zinc, (zinc acetate, zinc chloride, zinc gluconate), copper (copper chloride, copper sulfate), lead, silver, magnesium, sodium, potassium, lithium, molybdenum, vanadium should be included; other compositions for the care of mouth and teeth: for instance; salts, complexes and compounds containing fluorine (such as sodium fluoride, sodiummonofluorophosphate, aminofluorides, stannous fluoride), phosphates, carbonates and selenium.

Cf. furthermore J. Dent. Res. Vol. 28 No. 2, page 160-171,1949, wherein a wide range of tested compounds are mentioned.

Examples of active agents in the form of agents adjusting the pH in the oral cavity include for instance: acceptable acids, such as adipinic acid, succinic acid, fumaric acid, or salts thereof or salts of citric acid, tartaric acid, malic acid, acetic acid, lactic acid, phosphoric acid and glutaric acid and acceptable bases, such as carbonates, hydrogen carbonates, phosphates, sulfates or oxides of sodium, potassium, ammonium, magnesium or calcium, especially magnesium, and calcium.

Examples of active agents in the form of anti-smoking agents include for instance: nicotine, tobacco powder or silver salts, for instance silver acetate, silver carbonate and silver nitrate.

Further examples of active agents are medicines of any type.

Examples of active agents in the form of medicines include caffeine, salicylic acid, salicyl amide and related substances (acetylsalicylic acid, choline salicylate, magnesium salicylate, sodium salicylate), paracetamol, salts of pentazocine (pentazocine hydrochloride and pentazocinelactate), buprenorphine hydrochloride, codeine hydrochloride and codeine phosphate, morphine and morphine salts (hydrochloride, sulfate, tartrate), methadone hydrochloride, ketobemidone and salts of ketobemidone (hydrochloride), beta-blockers, (propranolol), calcium antagonists, verapamil hydrochloride, nifedinpine as well as suitable substances and salts thereof mentioned in Pharm. Int., Nov. 85, pages 267-271, Barney H. Hunter and Robert L. Talbert, nitroglycerine, erythrityl tetranitrate, strychnine and salts thereof, lidocaine, tetracaine hydrochloride, etorphine hydrochloride, atropine, insulin, enzymes (for instance papain, trypsin, amyloglucosidase. glucoseoxidase, streptokinase, streptodornase, dextranase, alpha amylase), polypeptides (oxytocin, gonadorelin, (LH. RH), desmopressin acetate (DDAVP), isoxsuprine hydrochloride, ergotamine compounds, chloroquine (phosphate, sulfate), isosorbide, demoxytocin, heparin.

Other active ingredients include beta-lupeol, Letigen, Sildenafil citrate and derivatives thereof.

Dental products include Carbami, CPP Caseine Phospho Peptide; Chlorhexidine, Chlorhexidine di acetate, Chlorhexidine Chloride, Chlorhexidine di gluconate, Hexetedine, Strontium chloride, Potassium Chloride, Sodium bicarbonate, Sodium carbonate, Fluor containing ingredients, Fluorides, Sodium fluoride, Aluminum fluoride, Ammonium fluoride, Calcium fluoride, Stannous fluoride, Other fluor containing ingredients Ammonium fluorosilicate, Potasium fluorosilicate, Sodium fluorosilicate, Ammonium monofluorphosphate, Calcium monofluorphosphate, Potassium monofluorphosphate, Sodium monofluorphosphate, Octadecentyl Ammonium fluoride, Stearyl Trihydroxyethyl Propylenediamine Dihydrofluoride, Vitamins include A, B1, B2, B6, B12, Folin acid, niacin, Pantothene acid, biotine, C, D, E, K.

Minerals include Calcium, phosphor, magnesium, iron, Zink, Cupper, lod, Mangan, Crom, Selene, Molybden. Other active ingredients include:Q10@, enzymes. Natural drugs including Ginkgo Biloba, ginger, and fish oil. The invention also relates to use of migraine drugs such as Serotonin antagonists: Sumatriptan, Zolmitriptan, Naratriptan, Rizatriptan, Eletriptan; nausea drugs such as Cyclizin, Cinnarizin, Dimenhydramin, Difenhydrinat; hay fever drugs such as Cetrizin, Loratidin, pain relief drugs such as Buprenorfin, Tramadol, oral disease drugs such as Miconazol, Amphotericin B, Triamcinolonaceton; and the drugs Cisaprid, Domperidon, Metoclopramid.

Active ingredients may comprise the below-mentioned compounds or derivates thereof but are not limited thereto: Acetaminophen, Acetylsalicylic acid Buprenorphine Bromhexin Celcoxib Codeine, Diphenhydramin, Diclofenac, Etoricoxib, Ibuprofen, Indometacin; Ketoprofen, Lumiracoxib, Morphine, Naproxen, Oxycodon, Parecoxib, Piroxicam, Pseudoefedrin, Rofecoxib, Tenoxicam, Tramadol, Valdecoxib, Calciumcarbonat, Magaldrate, Disulfiram, Bupropion, Nicotine, Azithromycin, Clarithromycin, Clotrimazole, Erythromycin, Tetracycline, Granisetron, Ondansetron, Prometazin, Tropisetron, Brompheniramine, Ceterizin, leco-Ceterizin, Chlorcyclizine, Chlorpheniramin, Chlorpheniramin, Difenhydramine, Doxylamine, Fenofenadin; Guaifenesin, Loratidin, des-Loratidin, Phenyltoloxamine, Promethazin, Pyridamine, Terfenadin, Troxerutin, Methyldopa, Methylphenidate, Benzalcon. Chloride, Benzeth. Chloride, Cetylpyrid. Chloride, Chlorhexidine, Ecabet-sodium, Haloperidol, Allopurinol, Colchinine, Theophylline, Propanolol, Prednisolone, Prednisone, Fluoride, Urea, Miconazole, Actot, Glibenclamide, Glipizide, Metformin, Miglitol, Repaglinide, Rosiglitazone, Apomorfin, Cialis, Sildenafil, Vardenafil, Diphenoxylate, Simethicone, Cimetidine, Famotidine, Ranitidine, Ratinidine, cetrizin, Loratadine, Aspirin, Benzocaine, Dextrometorphan, Ephedrine, Phenylpropanolamine, Pseudoephedrine, Cisapride, Domperidone, Metoclopramide, Acyclovir, Dioctylsulfosucc., Phenolphtalein, Almotriptan, Eletriptan, Ergotamine, Migea, Naratriptan, Rizatriptan, Sumatriptan, Zolmitriptan, Aluminum salts, Calcium salts, Ferro salts, Silver salts, Zinc-salts, Amphotericin B, Chlorhexidine, Miconazole, Triamcinolonacetonid, Melatonine, Phenobarbitol, Caffeine, Benzodiazepiner, Hydroxyzine, Meprobamate, Phenothiazine, Buclizine, Brometazine, Cinnarizine, Cyclizine, Difenhydramine, Dimenhydrinate, Buflomedil, Amphetamine, Caffeine, Ephedrine, Orlistat, Phenylephedrine, Phenylpropanolamin, Pseudoephedrine, Sibutramin, Ketoconazole, Nitroglycerin, Nystatin, Progesterone, Testosterone, Vitamin B 12, Vitamin C, Vitamin A, Vitamin D, Vitamin E, Pilocarpin, Aluminumaminoacetat, Cimetidine, Esomeprazole, Famotidine, Lansoprazole, Magnesiumoxide, Nizatide and or Ratinidine.

In one embodiment of the invention, the flavor may be used as taste masking in chewing gum comprising active ingredients, which by themselves have undesired taste or which alter the taste of the formulation.

The chewing gum may optionally contain usual additives, such as binding agents, acidulants, fillers, coloring agents, preservatives, and antioxidants.

Materials to be used for the above-mentioned encapsulation methods for sweeteners might e.g. include Gelatine, Wheat protein, Soya protein, Sodium caseinate, Caseine, Gum arabic, Mod. starch, Hydrolyzed starches (maltodextrines), Alginates, Pectin, Carregeenan, Xanthan gum, Locus bean gum, Chitosan, Bees wax, Candelilla wax, Carnauba wax, Hydrogenated vegetable oils, Zein and/or Sucrose.

In general, chewing gum may be manufactured by sequentially adding the various chewing gum ingredients to a commercially available mixer known in the art.

A mixing of chewing gum and gum base may generally be performed by a batch or a continuous processing technique. An example of basic applicable mixing principles is explained below.
After the initial ingredients have been thoroughly mixed, the chewing gum mass is discharged from the mixer and shaped into the desired form such as by rolling into sheets and cutting into sticks, extruded into chunks or casting into pellets.

Generally, the ingredients may be mixed by first melting the gum base and adding it to the running mixer. Colors, active agents and/or emulsifiers may also be added at this time. A softener such as glycerin may also be added at this time, along with syrup and a portion of the bulking agent/sweetener. Further portions of the bulking agent/sweetener may then be added to the mixer. A flavoring agent is typically added with the final portion of the bulking agent/sweetener. A high-intensity sweetener is preferably added after the final portion of bulking agent and flavor has been added.

The entire mixing procedure typically takes from five to fifteen minutes, but longer mixing times may sometimes be required. Those skilled in the art will recognize that many variations of the above described procedure may be followed. Including the one-step method described in US patent application 2004/0115305 hereby incorporated as reference.

The final chewing gums are formed by extrusion, compression, rolling and may be centre filled with liquids and/or solids in any form.

The chewing gum according to the invention may be formed as conventional pellets, centre filled, etc.

The chewing gum according to the present invention may also be provided with an outer coating, which may be a hard coating, a soft coating, a film coating, or a coating of any type that is known in the art, or a combination of such coatings. The coating may typically constitute 0.1 to 75 percent by weight of a coated chewing gum piece.

One preferred outer coating type is a hard coating, which term is including sugar coatings and sugar-free (or sugarless) coatings and combinations thereof. The object of hard coating is to obtain a sweet, crunchy layer, which is appreciated by the consumer and to protect the gum centers. In a typical process of providing the chewing gum centers with a protective sugar coating the gum centers are successively treated in suitable coating equipment with aqueous solutions of crystallizable sugar such as sucrose or dextrose, which, depending on the stage of coating reached, may contain other functional ingredients, e.g. fillers, colors, etc.

In one presently preferred embodiment, the coating agent applied in a hard coating process is a sugarless coating agent, e.g. a polyol including as examples sorbitol, maltitol, mannitol, xylitol, erythritol, lactitol and isomalt or e.g. a mono- di-saccharide including as example trehalose.

Or alternatively a sugar free soft coating e.g. comprising alternately applying to the centres a syrup of a polyol or a mono- di-saccharide, including as examples sorbitol, maltitol, mannitol, xylitol, erythritol, lactitol, isomalt and trehalose.

In further useful embodiments a film coating is provided by film-forming agents such as a cellulose derivative, a modified starch, a dextrin, gelatine, zein, shellec, gum arabic, a vegetable gum, a synthetic polymer, etc. or a combination thereof.

In an embodiment of the invention, the outer coating comprises at least one additive component selected from the group comprising of a binding agent, a moisture-absorbing component, a film-forming agent, a dispersing agent, an antisticking component, a bulking agent, a flavoring agent, a coloring agent, a pharmaceutically or cosmetically active component, a lipid component, a wax component, a sugar, an acid

A coated chewing gum center according to the invention may have any form, shape or dimension that permits the chewing gum center to be coated using any conventional coating process.

The gum centre of coated chewing gum element according to the invention can have any form, shape or dimension that permits the chewing gum centre to be coated using any conventional coating process. Accordingly, the gum centre may be e.g. in a form selected from a pellet, a cushion-shaped pellet, a stick, a tablet, a chunk, a pastille, a pill, a ball and a sphere, and typically the weight of a gum center may be 0.2 to 8 grams, preferably between 0.5 to 5 grams.

Note that the description, and specifically the claims, designates e.g. 1000 as 1,000 and ½ as 0.5.

The following non-limiting examples illustrate the manufacturing and evaluation of a chewing gum according to the invention.

### EXAMPLE 1

### Preparation of polyester resin

A resin sample is produced using a cylindrical glass, jacketed 10 L pilot reactor equipped with glass stir shaft and Teflon stir blades and bottom outlet. Heating of the reactor contents is accomplished by circulation of silicone oil, thermo stated to 130°C, through the outer jacket. ε-caprolactone (358.87 g, 3.145 mol) and 1,2-propylene glycol (79.87 g, 1.050 mol) are charged to the reactor together with stannous octoate (1.79 g, 4.42 x 10-3 mol) as the catalyst and reacting in about 30 min. at 130°C. Then molten D,L-lactide (4.877 kg, 33.84 mol) are added and reaction continued for about 2 hours. At the end of this period, the bottom outlet is opened, and molten polymer is allowed to drain into a Teflon-lined paint can. Characterization of the product indicates Mn = 6,000 g/mol and Mw = 7,000 g/mol (gel permeation chromatography with online MALLS detector) and Tg = 25-30°C (DSC, heating rate 10°C/min).

### EXAMPLE 2

The resin applied is a polyester resin provided by NatureWorks^{®}: PLA 5500 D which is an amorphous poly D,L-lactide. The homopolymer has a Tg of about 50°C (Mn - 50,000).

### EXAMPLE 3

### Preparation of polyester elastomer

An elastomer sample is produced using a 500 mL resin kettle equipped with an overhead stirrer, nitrogen gas inlet tube, thermometer, and distillation head for removal of methanol. To the kettle are charged 83.50 g (0.43 mole) dimethyl terephthalate, 99.29 g (0.57 mole) dimethyl adipate, 106.60 g (1.005 mole) di(ethylene glycol) and 0.6 g calcium acetate monohydrate. Under nitrogen, the mixture is slowly heated with stirring until all components become molten (120-140°C). Heating and stirring are continued and methanol is continuously distilled. The temperature slowly rises in the range 150-200°C, until the evolution of methanol ceases. Heating is discontinued and the content is allowed to cool to about 100°C. The reactor lid is removed and the molten polymer is carefully poured into a receiving vessel.

Characterization of the product indicates Mn = 40,000g/mol and Mw = 190,000g/mol (gel permeation chromatography with online MALLS detector) and Tg = -30°C (DSC, heating rate 10°C/min).

### EXAMPLE 4

### Preparation of gum bases

The process of preparing gum bases is carried out in the following way: The gum base components are added to a mixing kettle provided with mixing means like e.g. horizontally placed Z-shaped arms. The kettle has been preheated to a temperature of about 120°C. The mixture is mixed for 30-120 minutes until the whole mixture becomes homogeneous. The mixture is then discharged into the pan and allowed to cool to room temperature.

A slight modification of the process was applied in relation to gum bases 004, 006 and 010, where a mixing temperature of about 140°C were applied instead of the above mentioned 120°C.

Four different gum bases as shown in table 1 were prepared.

**Table 1: Gum base compositions, components designated by % by weight.**

| Gum base components | Gum base 001 | Gum base 002 | Gum base 003 | Gum base 004 |
|---|---|---|---|---|
| Conventional elastomer | 15 | 15 | 15 | 15 |
| Conventional natural resins | 20 | | | |
| Conventional PVA | 20 | 40 | 20 | 20 |
| Polyester of Example 1 | | | 20 | |
| Polyester of Example 2 | | | | 20 |
| Polyester of Example 3 | | | | |
| Filler | 20 | 20 | 20 | 20 |
| Emulsifier | 5 | 5 | 5 | 5 |
| Fat | 20 | 20 | 20 | 20 |

### EXAMPLE 5

### Preparation of Chewing gum

The gum bases of example 4 were used in the preparation of peppermint flavored chewing gum formulations 1001-1004 with the basic formulations shown in table 2 and where gum base 001 is applied for the preparation of chewing gum 1001, gum base 002 is applied for the preparation of chewing gum 1002 and so forth.

It is noted that chewing gums 1001 and 1002 refers to comparative examples, where the chewing gum 1001 comprises a 1:1 combination of natural resin and PVA and where the chewing gum 1002 comprises a resin based on PVA, solely.

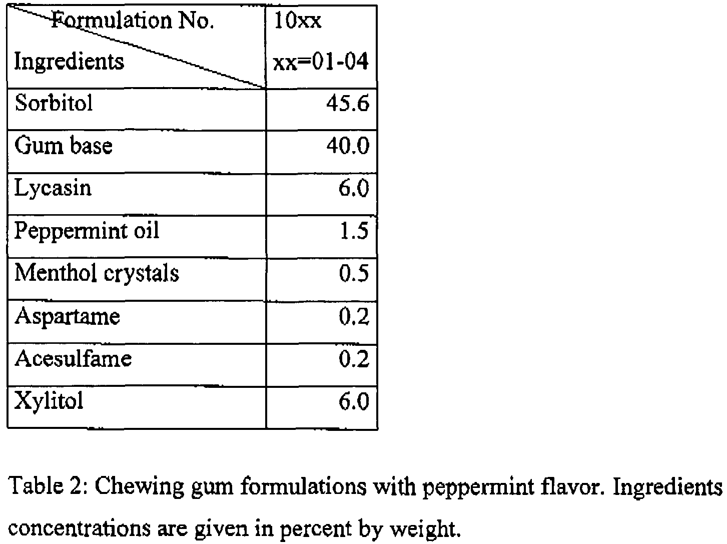

### EXAMPLE 6

### Preparation of Chewing gum

The gum bases of example 4 were used in the preparation of strawberry flavored chewing gum formulations 2001-2004 with the basic formulations shown in table 3 and where gum base 001 is applied for the preparation of chewing gum 2001, gum base 002 is applied for the preparation of chewing gum 2002 and so forth.

It is noted that chewing gums 2001 and 2002 refers to comparative examples, where the chewing gum 2001 comprises a 1:1 combination of natural resin and PVA and where the chewing gum 2002 comprises a resin based on PVA, solely.

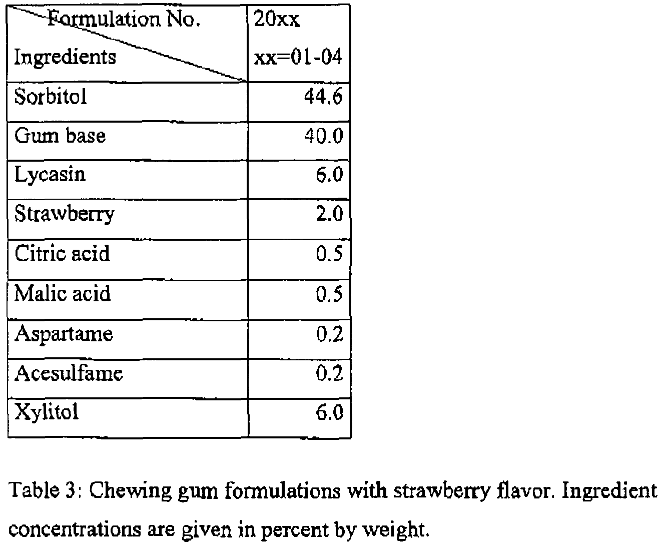

### Example 7

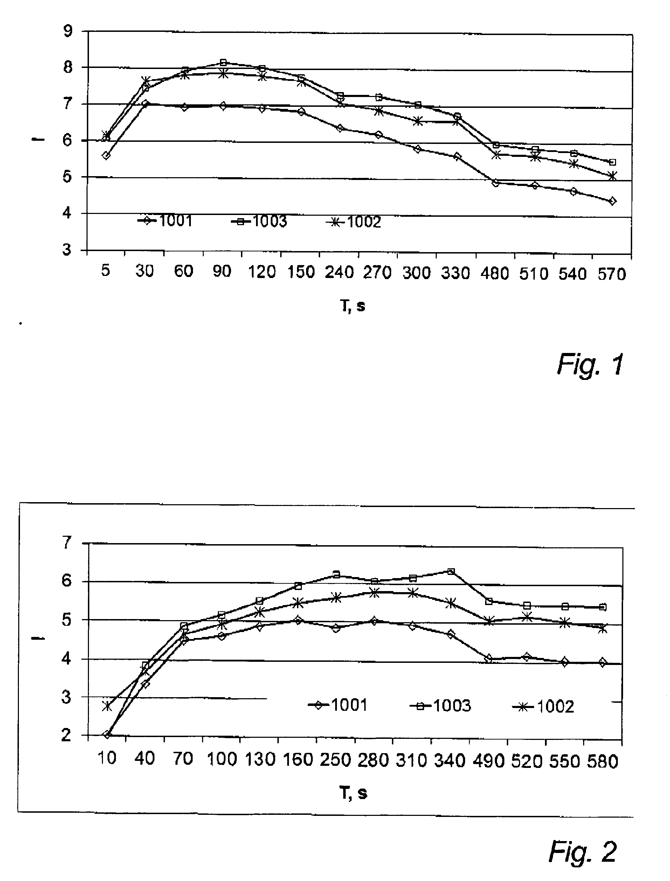

Some of the applied chewing gums of example 5 were evaluated by a time-intensity evaluation. The results are illustrated in fig. 1, where the flavor intensity is designated on the I-axis as a function of time, T. The time is specified in seconds.

Furthermore, a further evaluation of cooling has been performed and illustrated in fig. 2, where the cooling is designated on the I-axis as a function of time, T. The time is designated in seconds.

When evaluating the intensity alone, it is clearly established that the chewing gum 1001, i.e. the chewing gum containing natural resins, is inferior compared to the other samples, including the chewing gum 1002, wherein the resin complex is formed by PVA alone.

It is noted that chewing gum 1003 comprising a 1:1 mixture of a polyester resin and PVA has a modified and improved release over most of the evaluated time.

Turning to the evaluation of cooling as illustrated in fig. 2, the same picture is repeated, namely that the cooling of the natural resin containing chewing gum 1001 is inferior to the other chewing gums.

It is moreover noted that the cooling obtained in chewing gum 1003 also is improved compared to the comparative chewing gums 1001 and 1002. In other words, a strong indication is given in the direction that a mixture of polyester and PVA which is not dominated by PVA results in an improved release compared to chewing gum comprising resin consisting of PVA.

### Example 8

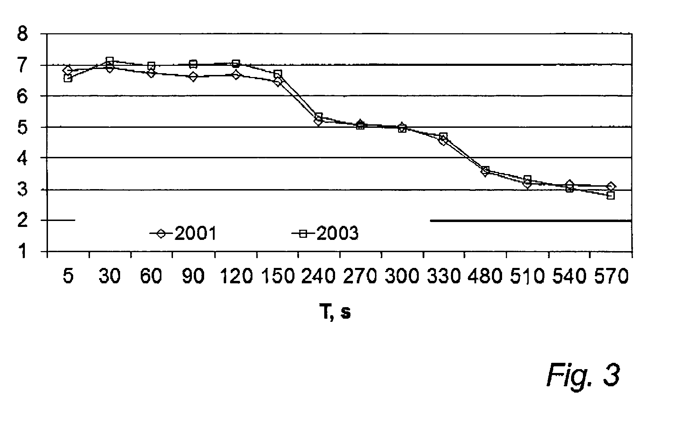

Some of the applied chewing gums of example 6 were evaluated by a time-intensity evaluation. The results are illustrated in fig. 3, where the flavor intensity is designated on the I-axis as a function of time, T. The time is specified in seconds.

It is noted that the initial release of the polyester resin containing chewing gum 2003 is improved significantly when compared to the conventional chewing gum 2001.

It is also noted that the chewing gum 2003 comprising a 1:1 mixture of PVA and polyester resin features a long term release which is comparable to the conventional chewing gum 2001.

It is generally concluded by the evaluations of example 7 and 8 and that the release have been significantly modified and improved when combining conventional elastomer with resinous polyesters according to the provisions of the invention.

## Claims

1. Chewing gum having modified release, said chewing gum comprising
at least one resinous polyester polymer in an amount from about 0.1 % to about 70% by weight of said chewing gum,
at least one non-polyester elastomer in an amount from about ½% to about 70% by weight of said chewing gum,
polyvinyl acetate (PVA) in an amount of at least 0.5% by weight of said chewing gum,
the amount of natural resins being less than about 2% by weight of said chewing gum and the amount of polyvinyl acetate (PVA) being less than about 14% by weight of said chewing gum, and
wherein said non-polyester elastomer is selected from the group of styrene butadiene rubber (SBR), poly isobutylene (PIB), isobutylene-isoprene rubber (IIR), polyisoprene, natural rubber and any combination thereof.

2. Chewing gum according to claim 1, wherein the amount of resinous polyester polymer is from about 2% to about 50% by weight of said chewing gum, preferably from about 2% to about 25% by weight of said chewing gum.

3. Chewing gum according to any of the claims 1-2, wherein said resinous polyester polymer has a glass transition temperature (Tg) above - 50°C, preferably above - 30°C, more preferably above -10°C, most preferably above 0°C.

4. Chewing gum according to any of the claims 1-3, wherein the molecular weight of said at least one resinous polyester polymer is less than 400,000 g/mol Mn, preferably less than 150,000 g/mol, more preferably less than 80,000 g/mol, most preferably less than 20,000 g/mol.

5. Chewing gum according to any of the claims 1-4, wherein the molecular weight of said at least one resinous polyester polymer is within the range of 500 g/mol Mn to 60,000 g/mol Mn.

6. Chewing gum according to any of the claims 1-5, wherein the molecular weight of said at least one resinous polyester polymer is within the range of 500 g/mol Mn to 40,000 g/mol Mn, preferably within the range of 500 g/mol Mn to 20,000 g/mol Mn.

7. Chewing gum according to any of the claims 1-6, wherein said PVA include vinyl acetate-vinyl laurate copolymers and mixtures thereof.

8. Chewing gum according to any of the claims 1-7, wherein the molecular weight of said PVA is within the range of 1,000 g/mol Mn to 60,000 g/mol Mn.

9. Chewing gum according to any of the claims 1-8, wherein the chewing gum comprises PVA in the amount of at least 1.0% by weight of the chewing gum, more preferably at least 2% by weight of the chewing gum, most preferably at least 5% by weight of the chewing gum.

10. Chewing gum according to any of the claims 1-9, wherein the chewing gum comprises at least one synthetic resin in the amount of less than 3:2 when compared to the amount of said resinous polyester polymer.

11. Chewing gum according to any of the claims 1-10, wherein the chewing gum is substantially free of natural resin(s).

12. Chewing gum according to any of the claims 1-11, wherein said chewing gum further comprises an elastomeric polyester polymer.

13. Chewing gum according to any of the claims 1-12, wherein the ratio between the non-polyester elastomer and the resinous polyester is within the range of about 5:1 to 1:30, preferably within the range of about 2:1 and 1:10, more preferably within the range of about 1:1 and 1:10.

14. Chewing gum according to any of the claims 1-13, wherein said chewing gum is coated with an outer coating selected from the group consisting of hard coating, soft coating and edible film-coating.

15. Chewing gum according to any of the claims 1-14, wherein the outer coating comprises at least one additive component selected from the group consisting of a binding agent, a moisture-absorbing component, a film-forming agent, a dispersing agent, an antisticking component, a bulking agent, a flavoring agent, a coloring agent, a pharmaceutically or cosmetically active component, a lipid component, a wax component, a sugar and an acid.

16. Chewing gum according to any of the claims 1-15, wherein said chewing gum is tableted.

## Patentansprüche

1. Kaugummi mit modifizierter Freisetzung, wobei der Kaugummi umfasst:
mindestens ein harzartiges Polyester-Polymer in einer Menge von etwa 0,1 bis etwa 70 Gew.-% des Kaugummis,
mindestens ein Nicht-Polyester-Elastomer in einer Menge von etwa 1/2 bis etwa 70 Gew.-% des Kaugummis,
Polyvinylacetat (PVA) in einer Menge von mindestens 0,5 Gew.-% des Kaugummis,
wobei die Menge an Naturharzen weniger als etwa 2 Gew.-% des Kaugummis beträgt und die Menge an Polyvinylacetat (PVA) weniger als etwa 14 Gew.-% des Kaugummis beträgt und
wobei das Nicht-Polyester-Elastomer ausgewählt ist aus der Gruppe von StyrolButadien-Kautschuk (SBR), Polyisobutylen (PIB), Isobutylen-Isopropen-Kautschuk (IIR), Polyisopren, Naturkautschuk und einer beliebigen Kombination derselben.

2. Kaugummi nach Anspruch 1, bei dem die Menge an harzartigem Polyester-Polymer etwa 2 bis etwa 50 Gew.-% des Kaugummis, vorzugsweise etwa 2 bis etwa 25 Gew.-% des Kaugummis beträgt.

3. Kaugummi nach irgendeinem der Ansprüche 1 - 2, bei dem das harzartige Polyester-Polymer eine Glasübergangstemperatur (Tg) über -50 °C, vorzugsweise über -30 °C, mehr bevorzugt über -10 °C, am meisten bevorzugt über 0 °C aufweist.

4. Kaugummi nach irgendeinem der Ansprüche 1 - 3, bei dem das Molekulargewicht des mindestens einen harzartigen Polyester-Polymers weniger als 400.000 g/Mol Mn, vorzugsweise weniger als 150.000 g/Mol, mehr bevorzugt weniger als 80.000 g/Mol, am meisten bevorzugt weniger als 20.000 g/Mol beträgt.

5. Kaugummi nach irgendeinem der Ansprüche 1 - 4, bei dem das Molekulargewicht des mindestens einen harzartigen Polyester-Polymers im Bereich von 500 g/Mol Mn bis 60.000 g/Mol Mn liegt.

6. Kaugummi nach irgendeinem der Ansprüche 1 - 5, bei dem das Molekulargewicht des mindestens einen harzartigen Polyester-Polymers im Bereich von 500 g/Mol Mn bis 40.000 g/Mol Mn, vorzugsweise im Bereich von 500 g/Mol Mn bis 20.000 g/Mol Mn, liegt.

7. Kaugummi nach irgendeinem der Ansprüche 1 - 6, bei dem das PVA Vinylacetat-Vinyllaurat-Copolymere und deren Mischungen einschließt.

8. Kaugummi nach irgendeinem der Ansprüche 1 - 7, bei dem das Molekulargewicht des PVA im Bereich von 1.000 g/Mol Mn bis 60.000 g/Mol Mn liegt.

9. Kaugummi nach irgendeinem der Ansprüche 1 - 8, bei dem der Kaugummi PVA in einer Menge von mindestens 1,0 Gew.-% des Kaugummis, mehr bevorzugt mindestens 2 Gew.-% des Kaugummis, am meisten bevorzugt mindestens 5 Gew.-% des Kaugummis umfasst.

10. Kaugummi nach irgendeinem der Ansprüche 1- 9, bei dem der Kaugummi mindestens ein synthetisches Harz in einer Menge von weniger als 3:2 im Vergleich zu der Menge an harzartigem Polyester-Polymer umfasst.

11. Kaugummi nach irgendeinem der Ansprüche 1 - 10, bei dem der Kaugummi im Wesentlichen frei von Naturharz(en) ist.

12. Kaugummi nach irgendeinem der Ansprüche 1 - 11, bei dem der Kaugummi ferner ein elastomeres Polyester-Polymer umfasst.

13. Kaugummi nach irgendeinem der Ansprüche 1 - 12, bei dem das Verhältnis zwischen dem Nicht-Polyester-Elastomer und dem harzartigen Polyester innerhalb des Bereichs von etwa 5:1 bis 1:30, vorzugsweise innerhalb des Bereichs von etwa 2:1 und 1:10, mehr bevorzugt innerhalb des Bereichs von etwa 1:1 und 1:10 liegt.

14. Kaugummi nach irgendeinem der Ansprüche 1 - 13, bei dem der Kaugummi mit einem äußeren Überzug überzogen ist, der ausgewählt ist aus der Gruppe bestehend aus Hartüberzug, Weichüberzug und essbarem Filmüberzug.

15. Kaugummi nach irgendeinem der Ansprüche 1 - 14, bei dem der äußere Überzug mindestens eine Zusatzkomponente umfasst, die ausgewählt ist aus der Gruppe bestehend aus einem Bindemittel, einer Feuchtigkeit absorbierenden Komponente, einem filmbildenden Mittel, einem Dispergiermittel, einer Antiklebrigkeits-Komponente, einem Füllmittel, einem Geschmacksstoff, einem farbgebenden Mittel, einer pharmazeutisch oder kosmetisch aktiven Komponente, einer Lipid-Komponente, einer Wachs-Komponente, einem Zucker und einer Säure.

16. Kaugummi nach irgendeinem der Ansprüche 1 - 15, bei dem der Kaugummi tablettiert ist.

## Revendications

1. Gomme à mâcher ayant une libération modifiée, ladite gomme à mâcher comprenant
au moins un polymère polyester résineux en une quantité d'environ 0,1 % à environ 70 % en poids de ladite gomme à mâcher,
au moins un élastomère non polyester en une quantité d'environ ½ % à environ 70 % en poids de ladite gomme à mâcher,
du poly(acétate de vinyle) (PVA) en une quantité d'au moins 0,5 % en poids de ladite gomme à mâcher,
la quantité de résines naturelles étant inférieure à environ 2 % en poids de ladite gomme à mâcher et la quantité de poly(acétate de vinyle) (PVA) étant inférieure à environ 14 % en poids de ladite gomme à mâcher, et
où ledit élastomère non polyester est choisi dans le groupe du caoutchouc de styrène butadiène (SBR), du polyisobutylène (PIB), du caoutchouc d'isobutylène-isoprène (IIR), du polyisoprène, du caoutchouc naturel et de toute combinaison de ceux-ci.

2. Gomme à mâcher selon la revendication 1 où la quantité de polymère polyester résineux est d'environ 2 % à environ 50 % en poids de ladite gomme à mâcher, de préférence d'environ 2 % à environ 25 % en poids de ladite gomme à mâcher.

3. Gomme à mâcher selon l'une quelconque des revendications 1-2 où ledit polymère polyester résineux a une température de transition vitreuse (Tg) supérieure à -50°C, de préférence supérieure à -30°C, de préférence encore supérieure à -10°C, de manière particulièrement préférable supérieure à 0°C.

4. Gomme à mâcher selon l'une quelconque des revendications 1-3 où la masse moléculaire dudit au moins un polymère polyester résineux est inférieure à 400000 g/mol Mn, de préférence inférieure à 150000 g/mol, de préférence encore inférieure à 80000 g/mol, de manière particulièrement préférable inférieure à 20000 g/mol.

5. Gomme à mâcher selon l'une quelconque des revendications 1-4 où la masse moléculaire dudit au moins un polymère polyester résineux est dans la plage de 500 g/mol Mn à 60000 g/mol Mn.

6. Gomme à mâcher selon l'une quelconque des revendications 1-5 où la masse moléculaire dudit au moins un polymère polyester résineux est dans la plage de 500 g/mol Mn à 40000 g/mol Mn, de préférence dans la plage de 500 g/mol Mn à 20000 g/mol Mn.

7. Gomme à mâcher selon l'une quelconque des revendications 1-6 où ledit PVA inclut des copolymères acétate de vinyle-laurate de vinyle et leurs mélanges.

8. Gomme à mâcher selon l'une quelconque des revendications 1-7 où la masse moléculaire dudit PVA est dans la plage de 1000 g/mol Mn à 60000 g/mol Mn.

9. Gomme à mâcher selon l'une quelconque des revendications 1-8 où la gomme à mâcher comprend du PVA en la quantité d'au moins 1,0 % en poids de la gomme à mâcher, de préférence encore au moins 2 % en poids de la gomme à mâcher, de manière particulièrement préférable au moins 5 % en poids de la gomme à mâcher.

10. Gomme à mâcher selon l'une quelconque des revendications 1-9 où la gomme à mâcher comprend au moins une résine synthétique en la quantité inférieure à 3 : 2 quand elle est comparée à la quantité dudit polymère polyester résineux.

11. Gomme à mâcher selon l'une quelconque des revendications 1-10 où la gomme à mâcher est sensiblement dépourvue de résine(s) naturelle(s).

12. Gomme à mâcher selon l'une quelconque des revendications 1-11 où ladite gomme à mâcher comprend en outre un polymère polyester élastomère.

13. Gomme à mâcher selon l'une quelconque des revendications 1-12 où le rapport entre l'élastomère non polyester et le polyester résineux est dans la plage d'environ 5 : 1 à 1 : 30, de préférence dans la plage d'environ 2 : 1 et 1 : 10, de préférence encore dans la plage d'environ 1 : 1 et 1 : 10.

14. Gomme à mâcher selon l'une quelconque des revendications 1-13 où ladite gomme à mâcher est enrobée avec un enrobage externe choisi dans le groupe consistant en un enrobage dur, un enrobage mou et un enrobage de type film comestible.

15. Gomme à mâcher selon l'une quelconque des revendications 1-14 où l'enrobage externe comprend au moins un composant additif choisi dans le groupe consistant en un agent liant, un composant absorbant l'humidité, un agent filmogène, un agent dispersant, un composant antiadhésif, un agent formant du volume, un agent aromatisant, un agent colorant, un composant pharmaceutiquement ou cosmétiquement actif, un composant lipide, un composant cire, un sucre et un acide.

16. Gomme à mâcher selon l'une quelconque des revendications 1-15 où ladite gomme à mâcher est mise sous forme de tablettes.
